# EUROPÄISCHE PATENTANMELDUNG

(11) **EP 4 685 679 A1**
(43) Veröffentlichungstag der Anmeldung: **28.01.2026**
(21) Anmeldenummer: 24191100.7
(22) Anmeldetag: 26.07.2024
(51) Int. Cl.: G06F 21/53, G06F 9/455

(54) **VERFAHREN UND VORRICHTUNGEN ZUM ÜBERPRÜFEN EINER AUSFÜHRUNG EINER BYTECODE-ANWEISUNG**

(71) Anmelder: SICK AG, 79183 Waldkirch (DE)
(72) Erfinder: LIEGIBEL, Pascal, 79183 Waldkirch (DE); NEUMANN, Thomas, 79227 Schallstadt (DE)
(74) Vertreter: Manitz Finsterwald Patent- und Rechtsanwaltspartnerschaft mbB

(57) **Zusammenfassung**

Ein Verfahren zum Überprüfen einer Ausführung einer Bytecode-Anweisung eines Sicherheitsprogramms, weist auf: Ausführen der Bytecode-Anweisung in einer virtuellen Maschine; und Überprüfen durch die virtuelle Maschine, ob die Bytecode-Anweisung korrekt ausgeführt wurde.

## Beschreibung

Die Erfindung betrifft Verfahren und Vorrichtungen zum Überprüfen einer Ausführung einer Bytecode-Anweisung.

Die Bytecode-Anweisung kann in einer Fertigungszelle ausgeführt werden. Eine Fertigungszelle, die aus einem Roboter, einer Maschine und Sicherheitseinrichtungen bestehen kann, kann eine Art automatisiertes Fertigungssystem sein, das darauf ausgelegt sein kann, eine bestimmte Aufgabe sicher und effizient auszuführen. Der Roboter kann für die Handhabung des Werkstücks und dessen Transport zwischen verschiedenen Maschinen und Arbeitsstationen verantwortlich sein. Die Maschine kann den eigentlichen Fertigungsvorgang ausführen, beispielsweise Schweißen, Schneiden oder Montieren. Die Sicherheitseinrichtungen können (beispielsweise durch Ausführen eines Sicherheitsprogramms) so ausgelegt sein, dass sie die Arbeiter vor allen mit dem Fertigungsprozess verbundenen Gefahren schützen.

Der Herstellungsprozess kann durch ein Programm geschützt sein, das in einer höheren Programmiersprache geschrieben ist und auf einem Controller ausgeführt wird. Dieses Programm kann als Sicherheitsprogramm bezeichnet werden.

Dieses Programm kann für die Durchführung verschiedener Sicherheitsvorgänge verantwortlich sein, wie z.B. Anhalten des Roboters oder der Maschine, wenn ein Arbeiter die Arbeitszelle betritt; oder z.B. Verhindern des Starts des Roboters oder der Maschine, bis alle Sicherheitsvorrichtungen vorhanden sind und ordnungsgemäß funktionieren; oder z.B. Begrenzen der Geschwindigkeit und des Bewegungsbereichs des Roboters oder der Maschine, um Kollisionen mit Arbeitern oder anderen Objekten zu verhindern; oder z.B. Überwachen des Herstellungsprozesses auf Unregelmäßigkeiten oder Probleme und Abschalten des Roboters oder der Maschine, falls erforderlich.

Durch die Verwendung einer höheren Programmiersprache kann das Sicherheitsprogramm komplexer und ausgefeilter gestaltet werden, sodass es ein breiteres Spektrum an Gefahren bewältigen und den Arbeitnehmern ein höheres Maß an Sicherheit bieten kann.

Sicherheitsprogramme schützen Menschen vor Maschinen, daher müssen sie vor diesen Fehlern geschützt werden:
1) Zufällige Hardwarefehler: Diese können bei jedem elektronischen Gerät auftreten, einschließlich des Controllers, der das Sicherheitsprogramm ausführt. Sie können durch Herstellungsfehler, Verschleiß oder Umweltfaktoren verursacht werden. Wenn ein zufälliger Hardwarefehler auftritt, kann das Sicherheitsprogramm fehlerhaft funktionieren, was zu einem Sicherheitsrisiko führen kann.
2) Umgebungsstörungen: Dies kann durch elektromagnetische Störungen (electromagnetic interference; EMI), Hochfrequenzstörungen (radio frequency interference; RFI) oder elektrostatische Entladung (electrostatic discharge; ESD) geschehen. EMI und RFI können durch andere elektronische Geräte in der Fertigungszelle verursacht werden, wie z. B. Motoren, Schweißgeräte und Stromleitungen. ESD kann durch Kontakt mit einem geladenen Objekt verursacht werden, wie z. B. dem Körper einer Person oder einem Gerät. Beispielsweise könnte ein starkes EMI-Signal dazu führen, dass das Sicherheitsprogramm ein Sicherheitssensorsignal falsch interpretiert und denkt, es bestehe keine Gefahr, obwohl es eine Gefahr gibt.
3) Betriebssystemfehler: Betriebssysteme sind komplexe Softwaresysteme und können Fehler enthalten. Wenn ein Fehler im Betriebssystem auftritt, kann dies dazu führen, dass das Sicherheitsprogramm abstürzt oder sich unerwartet verhält. Ein Fehler könnte beispielsweise dazu führen, dass das Sicherheitsprogramm nicht mehr ausgeführt wird und die Fertigungszelle so vor Gefahren geschützt ist.
4) Störende Softwarefehler: Dies kann passieren, wenn Software installiert wird, die nicht speziell für die Zusammenarbeit mit dem Sicherheitsprogramm entwickelt wurde. Diese Software könnte andere Anwendungsprogramme, Malware oder sogar Systemdienstprogramme enthalten. Beispielsweise könnte sich ein Virus auf dem Controller installieren und das Sicherheitsprogramm ändern, wodurch es zu Fehlfunktionen oder zur Deaktivierung kommt.

Es ist Aufgabe der Erfindung, Vorrichtungen und Verfahren bereitzustellen, die die oben beschriebenen Fehler beheben oder vermeiden. Eine Lösung besteht erfindungsgemäß darin, eine Bytecode-Virtual-Machine (BVM, oder kurz nur Virtual Machine, VM) in Software zu erstellen, die diese Fehler erkennt. Eine BVM ist ein in Software simulierter Computer, der auf einem physischen Computer ausgeführt werden kann. Sie erstellt eine Umgebung, die sich wie ein Computer verhält/simuliert, aber die oben genannten Fehler in der zugrunde liegenden Hardware und im Betriebssystem erkennen und kontrolliert behandeln kann, z. B. um das Sicherheitsprogramm bei Speicherfehlern ordnungsgemäß herunterzufahren.

Die Lösung der Aufgabe erfolgt durch ein Verfahren zum Überprüfen einer Ausführung einer Bytecode-Anweisung eines Sicherheitsprogramms mit den Merkmalen des Anspruchs 1 und eine Vorrichtung zum Überprüfen einer Ausführung einer Bytecode-Anweisung eines Sicherheitsprogramms mit den Merkmalen des Anspruchs 13.

Ein erfindungsgemäßes Verfahren zum Überprüfen einer Ausführung einer Bytecode-Anweisung eines Sicherheitsprogramms umfasst: Ausführen der Bytecode-Anweisung in einer virtuellen Maschine; und Überprüfen durch die virtuelle Maschine, ob die Bytecode-Anweisung korrekt ausgeführt wurde.

Es kann also eine Virtual Machine bereitgestellt werden, die nicht nur den Bytecode ausführt, sondern zugleich überprüft, ob der Bytecode korrekt ausgeführt wurde. Dabei kann die Virtual Machine jeden herkömmlichen Bytecode verwenden; der Bytecode kann also wie herkömmlich durch Kompilieren erzeugt werden (es ist also kein spezieller Compiler nötig), und bereits erzeugter Bytecode kann verwendet werden (muss also nicht für die Überprüfung bzw. den Einsatz mit der Virtual Machine, die die korrekte Ausführung überprüft, neu kompiliert werden).

Eine Bytecode-Anweisung kann kurz auch als Bytecode bezeichnet werden. Als Bytecode (oder Bytecode-Programm) kann aber auch eine Mehrzahl von Bytecode-Anweisungen bezeichnet werden.

Das Sicherheitsprogramm kann eine Sicherheits- oder Schutzaufgabe auszuführen, beispielsweise die Verhinderung der Kollision eines Menschen und eines Objekts, beispielsweise Roboters. Ein Sicherheitsprogramm kann aus mehreren Logikeinheiten bestehen, die über mehrere physische Knoten verteilt sein können. Ein Sicherheitsprogramm kann auch sicherheitsrelevante Konfigurationen enthalten.

Das Verfahren gemäß verschiedener Ausführungsformen kann zum Aufteilen imperativer Logik in atomare Aktionen eingesetzt werden, und um diese atomaren Aktionen sicher auszuführen. Es kann das Erkennen von Fehlern in der zugrunde liegenden Hard- und Software ermöglichen, wenn funktionale, sicherheitsrelevante Logik ausgewertet wird, die in einer höheren Programmiersprache, z. B. Lua, angegeben ist.

Eine zeitaufwändige Implementierung funktionaler Sicherheitslogik mit herkömmlichen Technologie-Stacks, die in der Sicherheitssoftware-Entwicklung verwendet werden, kann vermieden werden. Herkömmliche Technologie-Stacks arbeiten direkt auf der zugrunde liegenden Hardware ohne eine zusätzliche Softwareschicht, die die ordnungsgemäße Funktion der Hardware überwacht.

Das Verfahren gemäß verschiedener Ausführungsformen kann beispielsweise eingesetzt werden für sichere Container-Orchestrierungssoftware (wie sie beispielsweise in den europäischen Patentanmeldungen 24 176 635.1 und 24 176 655.9 beschrieben ist), software-basierte sichere Sensoren und/ oder für Sicherheitssteuerungen.

Ein Bytecode kann eine Art von Zwischencode sein, der von einem Compiler aus einem höheren Programmiersprachenquellcode erzeugt wird. Der Bytecode kann ein maschinenunabhängiger Code sein, der von einer virtuellen Maschine ("virtual machine"; VM) interpretiert oder just-in-time kompiliert und ausgeführt werden kann. Bytecodes können eine Plattformunabhängigkeit und eine Optimierung des Programmcodes bieten.

Bytecode ist nicht auf eine bestimmte Hardwarearchitektur festgelegt bzw. für eine bestimmte Hardwarearchitektur geschrieben. Stattdessen ist Bytecode für eine virtuelle Maschine bestimmt, die auf verschiedenen Plattformen implementiert werden kann. Dies ermöglicht die Ausführung desselben Bytecodes auf unterschiedlichen Betriebssystemen und Hardwaretypen.

Bytecode kann als Zwischenschicht zwischen dem Quellcode einer Hochsprache (wie beispielsweise Java oder Python) und dem Maschinencode, der von der Hardware direkt ausgeführt wird, dienen. Diese Zwischenschicht kann die Portabilität und Wartbarkeit des Codes erleichtern.

Eine virtuelle Maschine (englisch: "Virtual Machine"; VM), wie beispielsweise die Java Virtual Machine (JVM) oder die Python Virtual Machine (PVM), kann den Bytecode lesen und ausführen. Diese VM kann den Bytecode entweder interpretieren, indem sie ihn Schritt für Schritt ausführt, oder ihn in Maschinencode umwandeln (was auch als just-in-time-Kompilierung bezeichnet wird), um die Ausführung zu beschleunigen.

Eine virtuelle Maschine (VM) ist eine Software, die eine virtuelle Umgebung schafft, die wie ein eigenständiges Computersystem funktionieren kann. Die VM ermöglicht es, Programme so auszuführen, als ob sie auf einer physischen Maschine laufen würden, obwohl sie in Wirklichkeit innerhalb einer isolierten Softwareumgebung auf einem Host-System laufen.

Eine VM kann isoliert vom Host-Betriebssystem und anderen VMs auf demselben Host laufen. Eine VM kann die physischen Ressourcen (wie CPU (Central Processing Unit), Speicher, oder Festplatte) des Host-Systems teilen. Eine Virtualisierungsschicht kann dafür sorgen, dass die Ressourcen effizient zugeteilt werden und dass mehrere VMs unabhängig voneinander laufen können. VMs können eine Abstraktion der Hardware bereitstellen, so dass es so scheint, als ob jede VM ihre eigene CPU, ihren eigenen Speicher, ihre eigene Festplatte usw. besitzt, obwohl diese Ressourcen mit anderen VMs geteilt werden.

In einer Ausführungsform ist oder enthält die Bytecode-Anweisung eine Ausführungssteuerung-Anweisung. Dann kann das Überprüfen durch die virtuelle Maschine, ob die Bytecode-Anweisung korrekt ausgeführt wurde, ein Überprüfen einer Checksumme enthalten oder sein. Beispielsweise kann das Überprüfen eine Diagnostik der Ausführungssteuerung bereitstellen. Beispielsweise können ein Aufrufstapel und/ oder ein Bytecode-Stream durch die Verwendung von Prüfsummen geschützt werden.

In einer Ausführungsform ist oder enthält die Bytecode-Anweisung eine Anweisung zum Ändern einer Variable. Dann kann das Überprüfen durch die virtuelle Maschine, ob die Bytecode-Anweisung korrekt ausgeführt wurde, ein redundantes Speichern der Variable enthalten oder sein. Beispielsweise kann das Überprüfen eine Diagnostik globaler Variablen bereitstellen. Beispielsweise können Operationen im globalen Variablenraum durch redundante Speicherung von In-/Exklusions-Prüfsummen diagnostiziert werden.

In einer Ausführungsform ist oder enthält die Bytecode-Anweisung eine Anweisung zum Ausführen einer arithmetischen Operation aufweist. Dann kann das Überprüfen durch die virtuelle Maschine, ob die Bytecode-Anweisung korrekt ausgeführt wurde, ein Überprüfen eines Ergebnisses der arithmetischen Operation enthalten oder sein. Alternativ oder zusätzlich kann das Überprüfen durch die virtuelle Maschine, ob die Bytecode-Anweisung korrekt ausgeführt wurde, eine inverse arithmetische Operation zu der arithmetischen Operation enthalten oder sein. Beispielsweise kann das Überwachen eine Diagnostik arithmetischer (oder algorithmischer Operationen bereitstellen. Beispielsweise können arithmetische (oder algorithmische Operationen) durch Überprüfung ihrer Ergebnisse diagnostiziert werden, beispielsweise durch das Berechnen der inversen Operation und/ oder durch Vergleich des Ergebnisses mit dem Eingabewert.

Das Verfahren kann eine Mehrzahl von Bytecode-Anweisungen (welches dann als Bytecode-Programm bezeichnet werden kann) ausführen. Dabei können die Bytecode-Anweisungen unterschiedliche Arten von Anweisungen enthalten (beispielweise Ausführungssteuerung-Anweisungen und/ oder Anweisungen zum Ändern einer Variable und/ oder Anweisungen zum Ausführen einer arithmetischen Operation).

In einer Ausführungsform kann die virtuelle Maschine in einem Container, der durch eine Orchestrierungssoftware verwaltet wird, ausgeführt werden. Die kann beispielsweise in Kubernetes erfolgen.

Alternativ kann die virtuelle Maschine in einem Standalone-Container oder in einer Standalone-Hardware ausgeführt werden.

Die virtuelle Maschine kann eingerichtet sein und eingesetzt werden zum Ausführen eines Sicherheitsprogramms für die Produktionsumgebung. Das Sicherheitsprogramm kann eine Mehrzahl von Bytecode-Anweisungen enthalten. In der Produktionsumgebung können Maschinen (wie beispielsweise Roboter oder Werkzeugmaschinen) mit Menschen zusammenarbeiten, und/ oder es können sich Menschen zum Bedienen oder Warten der Maschine in der Produktionsumgebung aufhalten.

Die Aufgabe der Erfindung wird ferner durch eine Vorrichtung zum Überprüfen einer Ausführung einer Bytecode-Anweisung eines Sicherheitsprogramms gelöst. Dabei weist die Vorrichtung Mittel (beispielsweise ein Computersystem) auf zum Bereitstellen einer virtuelle Maschine, die eingerichtet ist zum Ausführen der Bytecode-Anweisung. Die virtuelle Maschine ist ferner eingerichtet zum Überprüfen, ob die Bytecode-Anweisung korrekt ausgeführt wurde.

Ferner kann eine Produktionsumgebung, die eine Maschine (beispielsweise einen Roboter und/ oder eine Werkzeugmaschine) und die hierin beschriebene Vorrichtung zum Überprüfen einer Ausführung einer Bytecode-Anweisung eines Sicherheitsprogramms enthält, bereitgestellt werden. Die virtuelle Maschine kann dann eingerichtet sein zum Ausführen eines Sicherheitsprogramms für die Produktionsumgebung, wobei das Sicherheitsprogramm eine Mehrzahl von Bytecode-Anweisungen enthält.

Ferner kann ein computerlesbares Speichermedium bereitgestellt werden, das Befehle umfasst, die bei der Ausführung durch einen Computer diesen veranlassen, das hierin beschriebene Verfahren auszuführen.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: eine Darstellung eines Controllers gemäß einer Ausführungsform;
- Fig. 2: eine Illustration der Bytecode Virtual Machine im erfindungsgemäßen Umfeld;
- Fig. 3: eine Illustration eines Quellcodes, der zu einem Bytecode kompiliert wird, welches über eine Virtuelle Maschine in Maschinencode übersetzt wird; und
- Fig. 4: ein Flussdiagramm, das ein Verfahren zum Überprüfen einer Ausführung einer Bytecode-Anweisung eines Sicherheitsprogramms gemäß einer Ausführungsform veranschaulicht.

Nachfolgend werden die erfindungsgemäßen Verfahren und Vorrichtungen exemplarisch anhand von Ausführungsbeispielen erläutert.

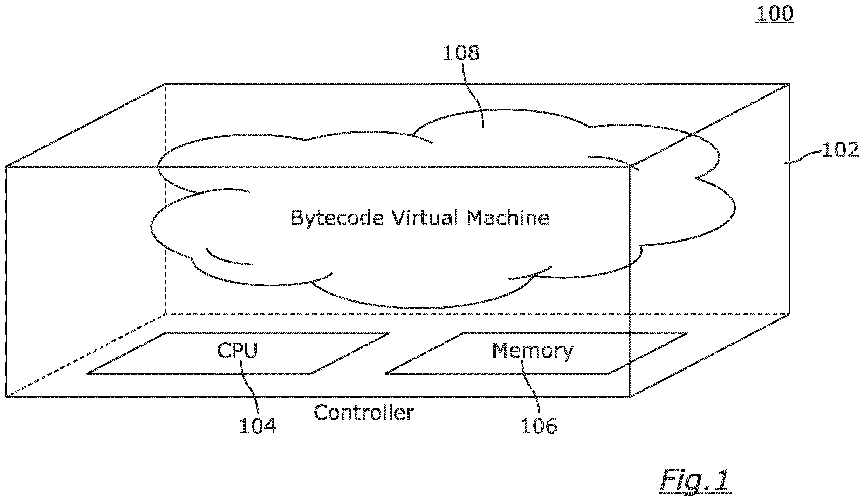

Fig. 1 zeigt eine Darstellung 100 eines Controllers 102 gemäß einer Ausführungsform. Der Controller 102 kann eine CPU (Central Processing Unit) 104, einen Speicher 106 und eine Bytecode Virtual Machine 108 (BVM) enthalten.

Ein BVM-basiertes Sicherheitsprogramm kann in der BVM 108 ausgeführt werden, die sich neben den Roboter- und Maschinensteuerungsprogrammen befindet, die auf dem Controller laufen. Dadurch wird das Sicherheitsprogramm von Fehlern isoliert, die in den Roboter- oder Maschinensteuerungsprogrammen auftreten.

Das BVM-basierte Sicherheitsprogramm kann verschiedene Techniken zur Fehlererkennung verwenden, wie z. B. Überprüfung der Integrität des Sicherheitsprogramms selbst und/ oder Überwachung der zugrunde liegenden Hardware auf Fehler.

Wenn die BVM 108 einen Fehler entweder im Sicherheitsprogramm selbst oder im zugrunde liegenden Betriebssystem oder der Hardware erkennt, kann es die Ausführung des Sicherheitsprogramms sofort stoppen und ein Signal senden, damit der Roboter und die Maschine das Gesamtsystem in einen sicheren Zustand versetzt werden können. Dies kann verhindern, dass der Roboter oder die Maschine weiter betrieben wird und möglicherweise ein Sicherheitsrisiko entsteht.

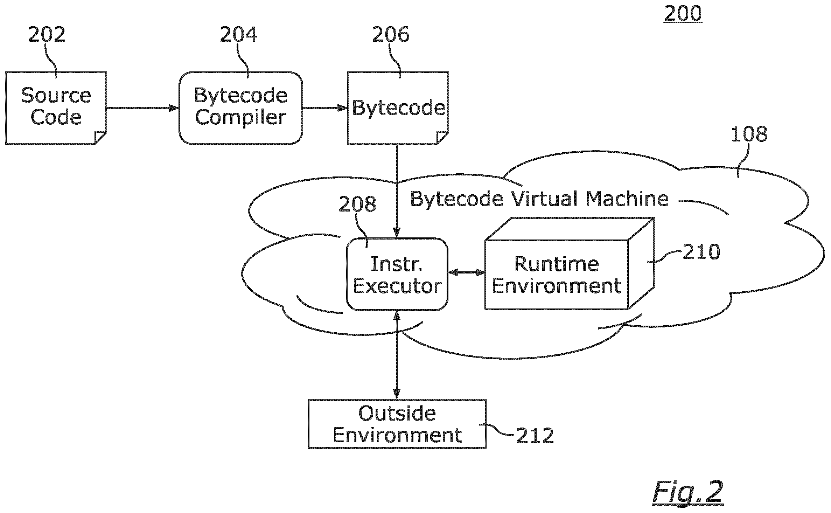

Fig. 2 zeigt eine Illustration 200 der Bytecode Virtual Machine 108 im erfindungsgemäßen Umfeld. Ein Quellcode 202 kann durch einen Bytecode-Compiler 204 in einen Bytecode 206 umgewandelt werden. Der Bytecode 206 kann einen Befehlsausführer 208 innerhalb der Bytecode Virtual Machine 108 weitergegeben werden und in einer Laufzeitumgebung 210 (Runtime Environment) ausgeführt werden. Die Ausführung des Bytecodes kann Auswirkungen auf die Umgebung 212 außerhalb der Bytecode Virtual Machine 108 haben.

Die Bytecode-Anweisungen 206 repräsentieren die Logik eines Sicherheitsprogramms für die BVM 108. Sie können ähnlich, aber nicht identisch mit Assembler sein, der für den Befehlssatz einer bestimmten Hardwarearchitektur generiert wird. Die Bytecode-Anweisungen 206 können Assembler insofern ähnlich sein, als sie nur Anweisungen auf niedriger Ebene enthalten, wie:
- Ausführungssteuerung (beispielsweise Verwalten eines Aufrufstapels, z. B. Pushen und Popen eines Werts auf oder vom Stapel, Verzweigen zu einer Position in der generierten Anweisungsliste);
- Verwaltung globaler Variablen (beispielsweise- Verwalten eines globalen Variablenbereichs, z. B. lesen und schreiben von Variablen eines bestimmten Typs);
- Algorithmische bzw. arithmetische Operationen (beispielsweise Ausführen grundlegender algorithmischer bzw. arithmetischer Operationen, z. B. Addieren, Subtrahieren, Dividieren und Multiplizieren von Variablen eines bestimmten Typs).

Die Bytecode-Anweisungen 206 können sich von Assembler aber darin unterscheiden, dass die Bytecode-Anweisungen 206 sich nicht auf einen Befehlssatz, der von einer tatsächlich vorhandenen Hardware ausgeführt werden kann, z. B. (X86, ARM, ...) beschränken. Die Bytecode-Anweisungen 206 sind auf die BVM 108 zugeschnitten, die unabhängig von der zugrunde liegenden Hardware sein kann.

Zwar können die Bytecode-Anweisungen 206 auf die oben genannten Kategorien (also Ausführungssteuerung, globale Variablen und algorithmische bzw. arithmetische Operationen) reduziert werden, aber es können weitere hardwarebezogene Anweisungen, beispielsweise Anweisungen zur Konfiguration der Hardware oder Speicherverwaltungsparameter, fehlen.

Ein Sicherheitsprogramm kann aus einem Stream von Bytecode-Anweisungen bestehen. Dieser Stream von Bytecode-Anweisungen kann von einem Compiler (beispielsweise Bytecode-Compiler 204) generiert werden, der eine Programmiersprache höherer Ebene analysiert und die Anweisungen höherer Ebene in einen Stream von Bytecode-Anweisungen umwandelt. Dieser Stream von Bytecode-Anweisungen wird dann an die Bytecode-VM übergeben, um die Logik des Sicherheitsprogramms auszuführen.

Der Befehlsausführer 208 (welcher auch als Instruction Executor bezeichnet werden kann), kann den Strom der Bytecode-Befehle 206 einzeln lesen und führt sie aus. Jeder Bytecode-Befehl 206 führt normalerweise eine einfache Operation aus, z. B. das Laden eines Werts aus dem Speicher, das Ausführen einer Rechenoperation oder das Verzweigen zu einem anderen Teil des Stroms der Bytecode-Befehle 206. Die identifizierten atomaren Aktionen können einzeln in einer Sequenz ausgeführt werden.

Die Laufzeitumgebung 210 kann dem Befehlsausführer 208 die Ressourcen zur Verfügung stellen, die er zum Ausführen des Bytecode-Befehlsstroms 206 benötigt. Zu diesen Ressourcen können ein Speichermanager zum Zuweisen und Verwalten des Speichers für das Bytecode-Programm, und/ oder ein Stapel zum Speichern temporärer Werte und Operanden, und/ oder ein Klassenlader zum Laden von Klassen und Ressourcen und/ oder ein Garbage-Collector zum Freigeben ungenutzten Speichers gehören.

Die Laufzeitumgebung 210 kann außerdem eine Reihe von Standardbibliotheken bereitstellen, die das Bytecode-Programm 206 verwenden kann. Diese Bibliotheken können Funktionen zum Ausführen allgemeiner Vorgänge wie Lesen und Schreiben von Dateien, und/ oder Bearbeiten von Zeichenfolgen und Netzwerken enthalten.

Ein solcher Bytecode-VM-Ansatz findet sich in verschiedenen modernen Programmiersprachen, z. B. Python, Java, und Lua.

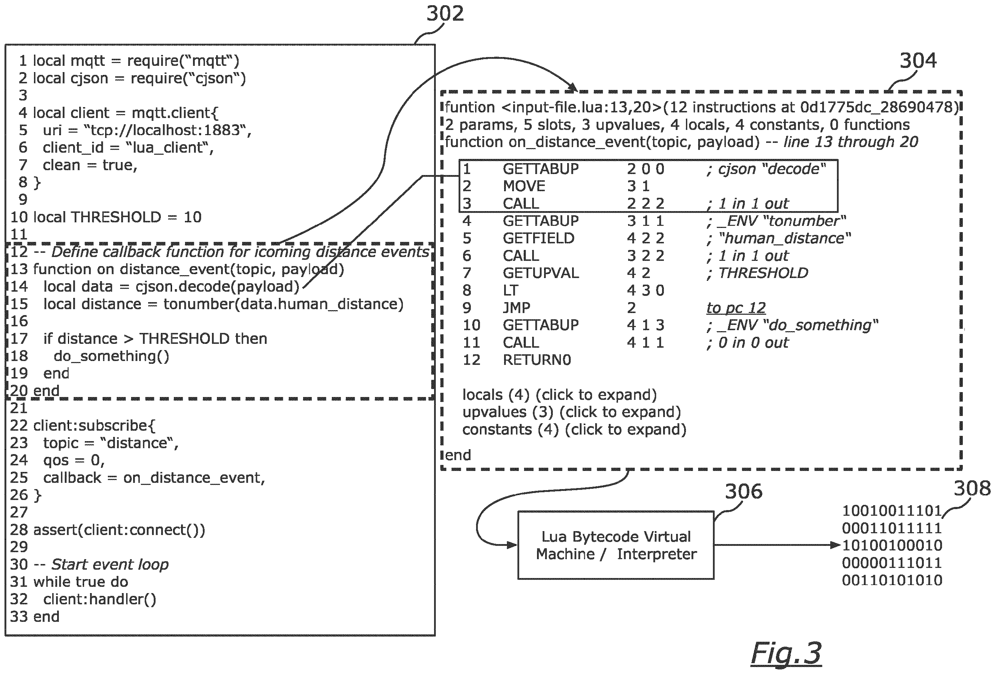

Fig. 3 zeigt eine Illustration 300 eines Quellcodes 302, der zu einem Bytecode 304 kompiliert wird, welcher über eine Virtuelle Maschine 306 in Maschinencode 308 übersetzt wird. Im Beispiel von Fig. 3 ist eine Funktion gezeigt, die eine Nutzlast empfängt und sie anhand eines definierten Schwellenwerts prüft. Es zeigt, wie der Quellcode 302 auf hoher Ebene in Bytecode 304 übersetzt und vom BVM als Binärcode 308 ausgeführt wird. Beispielsweise ruft der Bytecode "GETTABUP 2 0 0" die Decode-Funktion aus der cjson-Tabelle ab und speichert sie in Register 2, "MOVE 3 1" bewegt den Wert von Register 1 (Payload-Parameter) in Register 3, und "CALL 2 2 2" ruft die Funktion in Register 2 (Decodieren) mit 2 Argumenten (Register 2 und 3) und zwei Ergebnissen ab und decodiert die json-Payload und speichert das Ergebnis in Register 2.

Ein Unterschied zwischen einer herkömmlichen Bytecode-VM und einer Bytecode-VM gemäß verschiedener Ausführungsformen (welche als Safe-Bytecode-VM bezeichnet werden kann), kann unter anderem sein, dass die Safe-Bytecode-VM die Ausführung jedes einzelnen Bytecode-Befehls sofort überprüfen kann. Da die Bytecode-VM selbst und die Ausführung der einzelnen Befehle in Software implementiert sind, bietet die Safe-Bytecode-VM die Möglichkeit, diese Befehlskategorien durch die Einbindung zusätzlicher Diagnoselogik abzusichern. Während der Ausführung können alle Änderungen an Daten oder Systemressourcen in der Laufzeitumgebung sofort überprüft werden. Nach jedem ausgeführten Bytecode-Befehl kann überprüft werden, ob die Ausführung konsistent und korrekt war. Wenn die Ausführung nicht konsistent und korrekt ist oder die Änderungen an der Laufzeitumgebung beschädigt oder manipuliert sind, wird die Ausführung des Bytecode-Befehlsstroms abgebrochen. Das bedeutet, dass eine sofortige Diagnose des Ergebnisses der Bytecode-Befehle erfolgen kann.

Zusätzliche Diagnoselogik kann in der Bytecode-VM gemäß verschiedenen Ausführungsformen bereitgestellt werden: Diagnostik der Ausführungssteuerung (Aufrufstapel und Bytecode-Stream können durch die Verwendung von Prüfsummen geschützt werden), und/ oder Diagnostik globaler Variablen (Operationen im globalen Variablenraum werden durch redundante Speicherung von In-/Exklusions-Prüfsummen diagnostiziert), und/ oder Diagnostik algorithmischer bzw. arithmetischer Operationen (Algorithmische bzw. arithmetische Operationen können durch Überprüfung ihrer Ergebnisse diagnostiziert werden, z. B. inverse Operation und Vergleich des Ergebnisses mit dem Eingabewert).

Alle diese Diagnosemaßnahmen können in den Befehlsausführer integriert sein und können beim Durchlaufen des Bytecode-Befehlsstroms ausgelöst werden.

Beispielsweise kann der Ablauf der Diagnosemaßnahmen wie folgt sein:
a. Der Befehlsausführer startet und überprüft die Integrität des geladenen Bytecode-Streams, beispielsweise durch Prüfsummenvergleich.
b. Globale Variablen werden zugewiesen und mit Diagnosemaßnahmen ausgestattet, beispielsweise wird eine Variable zweimal an verschiedenen Speicherorten und/oder Speicherlayouts allokiert.
c. Die Ausführung der Bytecode-Operationen wird gestartet, wobei
   i. die Konsistenz des Bytecode-Befehlsstroms durch ständige Überwachung seiner Prüfsumme verifiziert werden;
   ii. die Überwachung der Ausführungszeit und der Verzweigungsausführung erfolgt über einen Watchdog-Mechanismus und die Überwachung des Programmzeigers innerhalb des Befehlsausführers.
d. Die verschiedenen Bytecode-Befehle werden ausgeführt, bis die Programmlogik beendet wird oder eine kritische Situation erkannt wird. Die Ausführung der Bytecode-Befehle wird entweder über die algorithmische Betriebsdiagnose oder die globale Variablendiagnose diagnostiziert.

Auf diese Weise können kritische Situationen in der zugrunde liegenden Hardware sicher diagnostiziert werden und der Befehlsausführer kann immer in der Lage sein, die Bytecode-Ausführung anzuhalten und Operationen auszulösen, um das umschließende System - in dem die Bytecode-VM ausgeführt wird - in einen sicheren Zustand zu bringen.

Die (sichere) BVM kann in einem Container ausgeführt werden, der von einer Orchestrierungssoftware wie Kubernetes (beispielsweise von einer sicheren Container-Orchestrierungssoftware, wie sie beispielsweise in den europäischen Patentanmeldungen 24 176 635.1 und 24 176 655.9 beschrieben ist) verwaltet wird, oder in einem eigenständigen Container, der von einer einfachen Container-Engine wie Docker oder Podman verwaltet wird, oder als eigenständige Binärdatei/Prozess direkt auf einem Host-Betriebssystem und einer Hardware-Appliance (beispielsweise einem Controller oder Sensor mit ausreichenden Hardwareressourcen ohne jegliche Containerisierung).

Ein Bytecode-Compiler kann Anweisungen einer höheren Programmiersprache in einen für das BVM geeigneten Bytecode-Anweisungsstrom umwandeln, bevor dieser ausgeführt werden kann.

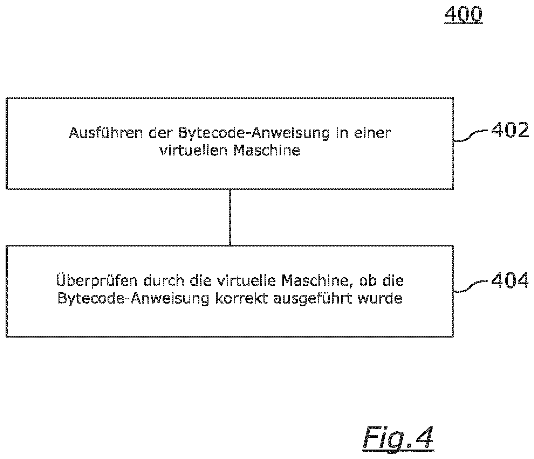

Fig. 4 zeigt ein Flussdiagramm 400, das ein Verfahren zum Überprüfen einer Ausführung einer Bytecode-Anweisung eines Sicherheitsprogramms gemäß einer Ausführungsform veranschaulicht. In 402 wird die Bytecode-Anweisung in einer virtuellen Maschine ausgeführt. In 404 überprüft die virtuelle Maschine, ob die Bytecode-Anweisung korrekt ausgeführt wurde.

Die Verfahren und Vorrichtungen gemäß verschiedener Ausführungsformen können eine hohe Effizienz bereitstellen: Es können moderne, ausdrucksstärkere Programmiersprachen verwendet werden, um sicherheitskritische Lösungen einfach in einer Soft-Echtzeitumgebung zu implementieren.

Die Verfahren und Vorrichtungen gemäß verschiedener Ausführungsformen können Kosteneinsparungen bereitstellen: es kann Standard-Hardware verwendet werden, um sicherheitskritische Lösungen auszuführen.

Die Verfahren und Vorrichtungen gemäß verschiedener Ausführungsformen können Sicherheit bereitstellen: Es kann vorhandene Hardware verwendet werden, die nicht für sicherheitskritische Lösungen vorgesehen ist, und diese Hardware kann als Teil einer Sicherheitslösung verwendet werden, was neue Anwendungsszenarien ermöglicht.

Die Verfahren und Vorrichtungen gemäß verschiedener Ausführungsformen können Isolierung ermöglichen: Ein BVM-basiertes Sicherheitsprogramm kann von den Roboter- und Maschinensteuerungsprogrammen und vom Betriebssystem isoliert sein. Dies kann eine kontrollierte Umgebung, Sandboxing und Zugriffskontrolle bieten, wodurch die Programmsicherheit und -robustheit verbessert und das Programm widerstandsfähiger gegen Fehler, die in anderen Programmen oder Prozessen auftreten, sein kann.

Die Verfahren und Vorrichtungen gemäß verschiedener Ausführungsformen können Portabilität bereitstellen: Ein BVM-basiertes Sicherheitsprogramm kann auf verschiedene Hardwareplattformen portiert werden. Dies kann die Verwendung desselben Sicherheitsprogramms für verschiedene Roboter und Maschinen erleichtern.

Die Verfahren und Vorrichtungen gemäß verschiedener Ausführungsformen können Skalierbarkeit bereitstellen: Ein BVM-basiertes Sicherheitsprogramm kann skaliert werden, um mehr Roboter und Maschinen zu unterstützen. Dies kann es zu einer guten Lösung für große Fertigungsbetriebe machen.

### Bezugszeichenliste

- 100: Darstellung eines Controllers gemäß einer Ausführungsform
- 102: Controller
- 104: CPU
- 106: Speicher
- 108: Bytecode Virtual Machine

- 200: Illustration der Bytecode Virtual Machine im erfindungsgemäßen Umfeld
- 202: Quellcode
- 204: Compiler
- 206: Bytecode
- 208: Befehlsausführer
- 210: Laufzeitumgebung
- 212: Umgebung außerhalb der Bytecode Virtual Machine

- 300: Illustration eines Quellcodes, der zu einem Bytecode kompiliert wird, welches über eine Virtuelle Maschine in Maschinencode übersetzt wird
- 302: Quellcode
- 304: Bytecode
- 306: Virtuelle Maschine
- 308: Maschinencode

- 400: Flussdiagramm, das ein Verfahren zum Überprüfen einer Ausführung einer Bytecode-Anweisung eines Sicherheitsprogramms gemäß einer Ausführungsform veranschaulicht
- 402: Schritt des Ausführens der Bytecode-Anweisung in einer virtuellen Maschine
- 404: Schritt des Überprüfens durch die virtuelle Maschine, ob die Bytecode-Anweisung korrekt ausgeführt wurde

## Patentansprüche

1. Verfahren zum Überprüfen einer Ausführung einer Bytecode-Anweisung eines Sicherheitsprogramms, insbesondere in einer Industrieanlage oder einem automatisierten Fertigungssystem, das Verfahren aufweisend: Ausführen (402) der Bytecode-Anweisung in einer virtuellen Maschine; und Überprüfen (404) durch die virtuelle Maschine, ob die Bytecode-Anweisung korrekt ausgeführt wurde.

2. Verfahren nach Anspruch 1,
wobei die Bytecode-Anweisung eine Ausführungssteuerung-Anweisung aufweist.

3. Verfahren nach Anspruch 2,
wobei das Überprüfen durch die virtuelle Maschine, ob die Bytecode-Anweisung korrekt ausgeführt wurde, ein Überprüfen einer Checksumme aufweist.

4. Verfahren nach einem der vorstehenden Ansprüche,
wobei die Bytecode-Anweisung eine Anweisung zum Ändern einer Variable aufweist.

5. Verfahren nach Anspruch 4,
wobei das Überprüfen durch die virtuelle Maschine, ob die Bytecode-Anweisung korrekt ausgeführt wurde, ein redundantes Speichern der Variable aufweist.

6. Verfahren nach einem der vorstehenden Ansprüche,
wobei die Bytecode-Anweisung eine Anweisung zum Ausführen einer arithmetischen Operation aufweist.

7. Verfahren nach Anspruch 6,
wobei das Überprüfen durch die virtuelle Maschine, ob die Bytecode-Anweisung korrekt ausgeführt wurde, ein Überprüfen eines Ergebnisses der arithmetischen Operation aufweist.

8. Verfahren nach Anspruch 6,
wobei das Überprüfen durch die virtuelle Maschine, ob die Bytecode-Anweisung korrekt ausgeführt wurde, eine inverse arithmetische Operation zu der arithmetischen Operation aufweist.

9. Verfahren nach einem der vorstehenden Ansprüche,
wobei die virtuelle Maschine in einem Container, der durch eine Orchestrierungssoftware verwaltet wird, ausgeführt wird.

10. Verfahren nach einem der Ansprüche 1 bis 9,
wobei die virtuelle Maschine in einem Standalone-Container ausgeführt wird.

11. Verfahren nach einem der Ansprüche 1 bis 9,
wobei die virtuelle Maschine in einer Standalone-Hardware ausgeführt wird.

12. Verfahren nach einem der vorstehenden Ansprüche,
wobei die virtuelle Maschine ferner eingerichtet ist zum Ausführen des Sicherheitsprogramms für die Produktionsumgebung aufweisend eine Mehrzahl von Bytecode-Anweisungen, wobei die Produktionsumgebung eine Maschine aufweist.

13. Vorrichtung zum Überprüfen einer Ausführung einer Bytecode-Anweisung eines Sicherheitsprogramms, die Vorrichtung aufweisend:
Mittel zum Bereitstellen einer virtuellen Maschine, die eingerichtet ist zum Ausführen der Bytecode-Anweisung;
wobei die virtuelle Maschine ferner eingerichtet ist zum Überprüfen, ob die Bytecode-Anweisung korrekt ausgeführt wurde.

14. Produktionsumgebung, aufweisend eine Maschine und die Vorrichtung nach Anspruch 13, wobei die virtuelle Maschine ferner eingerichtet ist zum Ausführen des Sicherheitsprogramms für die Produktionsumgebung aufweisend eine Mehrzahl von Bytecode-Anweisungen.

15. Computerlesbares Speichermedium, umfassend Befehle, die bei der Ausführung durch einen Computer diesen veranlassen, das Verfahren nach Ansprüche 1 bis 12 auszuführen.

## Geänderte Patentansprüche

### Geänderte Patentansprüche gemäss Regel 137(2) EPÜ.

1. Verfahren zum Überprüfen einer Ausführung einer Bytecode-Anweisung eines Sicherheitsprogramms, insbesondere in einer Industrieanlage oder einem automatisierten Fertigungssystem, das Verfahren aufweisend:
Ausführen (402) der Bytecode-Anweisung in einer virtuellen Maschine; und Überprüfen (404) durch die virtuelle Maschine, ob die Bytecode-Anweisung korrekt ausgeführt wurde;
wobei die Bytecode-Anweisung an einen Befehlsausführer innerhalb der virtuellen Maschine weitergegeben wird und in einer Laufzeitumgebung ausgeführt wird; und
wobei in den Befehlsausführer Diagnosemaßnahmen integriert sind, die beim Durchlaufen des Bytecode-Befehlsstroms ausgelöst werden.

2. Verfahren nach Anspruch 1,
wobei die Bytecode-Anweisung eine Ausführungssteuerung-Anweisung aufweist.

3. Verfahren nach Anspruch 2,
wobei das Überprüfen durch die virtuelle Maschine, ob die Bytecode-Anweisung korrekt ausgeführt wurde, ein Überprüfen einer Checksumme aufweist.

4. Verfahren nach einem der vorstehenden Ansprüche,
wobei die Bytecode-Anweisung eine Anweisung zum Ändern einer Variable aufweist.

5. Verfahren nach Anspruch 4,
wobei das Überprüfen durch die virtuelle Maschine, ob die Bytecode-Anweisung korrekt ausgeführt wurde, ein redundantes Speichern der Variable aufweist.

6. Verfahren nach einem der vorstehenden Ansprüche,
wobei die Bytecode-Anweisung eine Anweisung zum Ausführen einer arithmetischen Operation aufweist.

7. Verfahren nach Anspruch 6,
wobei das Überprüfen durch die virtuelle Maschine, ob die Bytecode-Anweisung korrekt ausgeführt wurde, ein Überprüfen eines Ergebnisses der arithmetischen Operation aufweist.

8. Verfahren nach Anspruch 6,
wobei das Überprüfen durch die virtuelle Maschine, ob die Bytecode-Anweisung korrekt ausgeführt wurde, eine inverse arithmetische Operation zu der arithmetischen Operation aufweist.

9. Verfahren nach einem der vorstehenden Ansprüche,
wobei die virtuelle Maschine in einem Container, der durch eine Orchestrierungssoftware verwaltet wird, ausgeführt wird.

10. Verfahren nach einem der Ansprüche 1 bis 9,
wobei die virtuelle Maschine in einem Standalone-Container ausgeführt wird.

11. Verfahren nach einem der Ansprüche 1 bis 9,
wobei die virtuelle Maschine in einer Standalone-Hardware ausgeführt wird.

12. Verfahren nach einem der vorstehenden Ansprüche,
wobei die virtuelle Maschine ferner eingerichtet ist zum Ausführen des Sicherheitsprogramms für die Produktionsumgebung aufweisend eine Mehrzahl von Bytecode-Anweisungen, wobei die Produktionsumgebung eine Maschine aufweist.

13. Vorrichtung zum Überprüfen einer Ausführung einer Bytecode-Anweisung eines Sicherheitsprogramms, die Vorrichtung aufweisend:
Mittel zum Bereitstellen einer virtuellen Maschine, die eingerichtet ist zum Ausführen der Bytecode-Anweisung;
wobei die virtuelle Maschine ferner eingerichtet ist zum Überprüfen, ob die Bytecode-Anweisung korrekt ausgeführt wurde;
wobei die Bytecode-Anweisung an einen Befehlsausführer innerhalb der virtuellen Maschine weitergegeben wird und in einer Laufzeitumgebung ausgeführt wird; und
wobei in den Befehlsausführer Diagnosemaßnahmen integriert sind, die beim Durchlaufen des Bytecode-Befehlsstroms ausgelöst werden.

14. Produktionsumgebung, aufweisend eine Maschine und die Vorrichtung nach Anspruch 13, wobei die virtuelle Maschine ferner eingerichtet ist zum Ausführen des Sicherheitsprogramms für die Produktionsumgebung aufweisend eine Mehrzahl von Bytecode-Anweisungen.

15. Computerlesbares Speichermedium, umfassend Befehle, die bei der Ausführung durch einen Computer diesen veranlassen, das Verfahren nach Ansprüche 1 bis 12 auszuführen.
